Europäisches Patentamt

European Patent Office

Office européen des brevets

(11) Publication number: **0 149 248**
**B1**

(12) EUROPEAN PATENT SPECIFICATION

(45) Date of publication of patent specification: **29.03.89**

(51) Int. Cl.⁴: **G 06 F 7/52**

(21) Application number: **84116428.8**

(22) Date of filing: **28.12.84**

(54) Method and apparatus for division using interpolation approximation.

(30) Priority: **30.12.83 JP 247646/83**

(43) Date of publication of application:
**24.07.85 Bulletin 85/30**

(45) Publication of the grant of the patent:
**29.03.89 Bulletin 89/13**

(84) Designated Contracting States:
**DE FR GB**

(56) References cited:
**US-A-3 828 175**

**IEEE TRANSACTIONS ON INSTRUMENTATION
AND MEASUREMENT, vol. IM-32, no. 2, June
1983, pages 309-312, IEEE, New York, US; G.R.
DAVIS et al.: "A high-speed digital divider"**

**PATENTS ABSTRACTS OF JAPAN, vol. 6, no.
112 (P-124) 990r, 23rd June 1982; & JP - A - 57
41 737 (NIPPON DENKI K.K.) 09-03-1982**

(73) Proprietor: **HITACHI, LTD.**
**6, Kanda Surugadai 4-chome Chiyoda-ku
Tokyo (JP)**

(72) Inventor: **Nakano, Hiraku
1260-21, Shibusawa
Hadano-shi (JP)**

(74) Representative: **Patentanwälte Beetz sen. -
Beetz jun. Timpe - Siegfried - Schmitt-Fumian
Steinsdorfstrasse 10
D-8000 München 22 (DE)**

**Description**

The present invention relates to a divide method and apparatus for use in a data processing system.

In order to simplify the calculations in a divide apparatus, approximations of the given dividend and given divisor are employed so that inaccuracies may be introduced into the quotient.

In a publication "IEEE Transactions on Instrumentation and Measurement", vol. IM-32, No. 2, June 1983, pages 309—312, IEEE, New York, US, G. R. Davis et al: "A high-speed digital divider", a divider is described using a method labelled "best line approach". The reciprocal of the denominator is first generated and used for subsequent multiplication by the numerator using a conventional multiplier device.

The best line method of reciprocal generation uses the segmentation approximation technique to create a high-speed divider that very closely duplicates the performance of a look-up table divider. Each linear segment of the desired $1/X$ function can be defined by a slope $S_i$ and y-intercept $Y_i$ where the ith subscript defines the ith segment on the curve.

The equation that defines the ith linear segment of the reciprocal approximation is

$$1/X \simeq Y_i + S_i X.$$

If the y-axis is shifted to intersect the midpoint $X_{oi}$ of the ith segment its equation becomes

$$1/X \simeq R_i + S_i \Delta X$$

where

$$R_i = Y_i + S_i \; X_{oi} \quad \text{and} \quad \Delta X = (X - X_{oi}).$$

In the hardware implementation, two PROM look-up tables are used for the storage of the segmentation constants $R_i$ and $S_i$. The more significant bits of the input word X are used to address the initial position $R_i$-PROM table as well as the slope $S_i$-PROM table. The lesser significant bits of X are used to generate the offset $\Delta X$ which, when multiplied by the appropriate slope $S_i$ and added to the correct initial position $R_i$, forms said desired function.

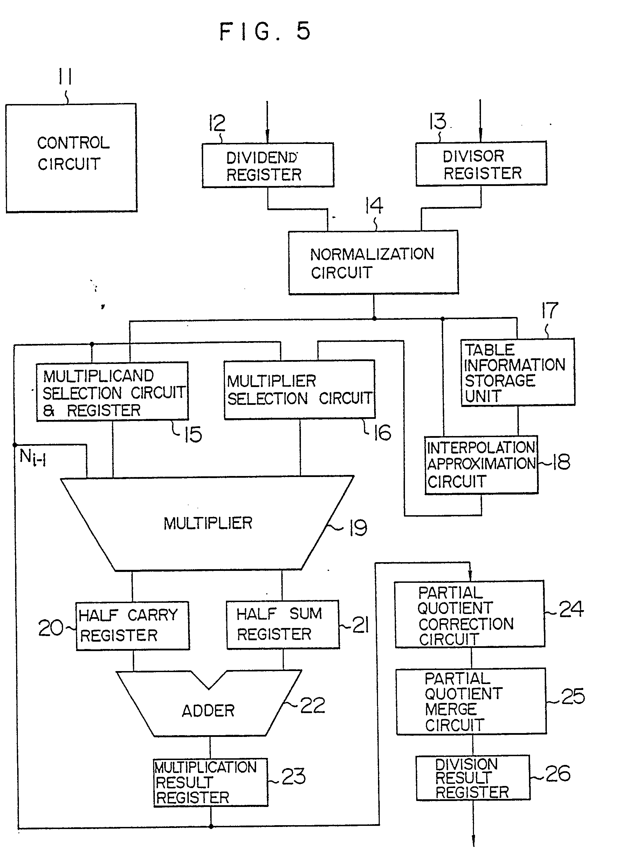

In the cited document is shown an example of an inverse number generating apparatus for 16 bits but it is easely guessed that it is difficult to obtain the inverse number having more than 16 bits, such as 32 or 64 bits only by using the "best line approach". Furthermore, the fact that the quotient outputted from the divider as shown in the citation is not always conform with a precise quotient with predetermined bits as to all combinations of the dividend and the divisor can be guessed from the fact that there are cases in which the error E exceeds over the region—$0.5 \leq E \leq 0.5$ in Figure 5 of the citation.

Therefore the divider of the citation has a problem concerning of bit number of the divisor and the quotient.

Furthermore, there is a conventional example for improving the accuracy of an approximate reciprocal divisor described in US—A—3 828 175 (AMDAHL Corp.). According to the method used a first approximate reciprocal divisor is obtained from a lookup table by using the high-order bits of the normalized divisor as an address, and a second approximate reciprocal divisor is obtained by multiplying the 1st approximate reciprocal divisor by the two's complement of the product of the 1st approximate reciprocal divisor and the normalized divisor. That is, the 2nd approximate reciprocal divisor $R_1$ can be obtained by

$$R_1 = R_0 X (2 - D_0 \times R_0)$$

where $D_0$ is a normalized divisor, $R_0$ is a 1st approximate reciprocal divisor, $R_1$ is a 2nd approximate reciprocal divisor, $a$ is a positive integer, and

$$|1 - D_0 \times R_0| < 2^{-a}.$$

In this case, the accuracy of the reciprocal of $R_1$ is:

$$|1 - D_0 \times R_1| = |1 - D_0 \times R_0 (2 - D_0 \times R_0)|$$
$$= |(1 - D_0 \times R_0)^2| < 2^{-2a}$$

The above method, however, requires two multiplications in order to obtain $R_1$.

Further, in the divide apparatus according to US—A—3 828 175 in which a partial remainder is calculated in the form of a remainder multiplied by an approximate reciprocal divisor, and in which successive iterations are performed such that the higher order bits of the partial remainder become the partial quotient, the following case may happen. That is, in the case that a quotient is calculated up to the desired bits by using an approximate reciprocal divisor smaller than a correct reciprocal divisor, and that the dividend is assumed to be equal to the divisor, the quotient does not always become 1, but it becomes in a binary notation a number such as having 1's from below the radix point down to the lowest order bit.

Thus, the quotient calculated by successive iterations may become smaller than the correct quotient by the lowest order bit 1, when compared down to the desired lowest bit. Therefore, if the product of the number obtained by adding 1 to the lowest order bit of the quotient calculated through successive iterations and the divisor is equal to or smaller than the dividend, then the number obtained by adding 1 to the lowest order bit of the quotient calculated through successive iterations is concluded as a final quotient. This, however, takes a fairly long time to check and correct the quotient.

It is an object of the present invention to provide a divide method and a divide apparatus which can obtain an approximate reciprocal divisor with high accuracy.

It is another object of the present invention to provide a divide method and a divide apparatus which can shorten the time required for performing check and correction after the quotient is calculated through successive iterations.

These objects are achieved by the present invention by providing a divide apparatus comprising:

table means for storing a plurality of approximate reciprocal divisors Mo, said table means further storing differences $\Delta$ corresponding to respective ones of said approximate reciprocal divisors between said respective ones and adjacent others of said approximate reciprocal divisors, and outputting one of said approximate reciprocal divisors Mo and the corresponding difference $\Delta$ by using the high-order bits of the divisor Do as an address of said table means;

interpolation approximation circuit means for proportionally allotting said difference $\Delta$ in accordance with a plurality of bits following the high-order bits of said divisor Do and for outputting a difference proportionate to the value of said plurality of bits and adding said proportional difference to said approximate reciprocal divisor Mo for outputting an interpolation approximated approximate reciprocal divisor M;

multiplier means for multiplying said dividend No by said interpolation approximated approximate reciprocal divisor M in order to obtain a quotient Q,

whereby the present invention is characterized in that said divisor and said dividend are obtained by normalizing in normalizing means (14) and in that said quotient Q is derived according to the following iteration rules:

$$A = 1 - Do \times M;$$

$$Q_1 + N_1 = N_0 \times M \text{ and}$$

$$Q_i + N_i = A \times Q_{i-1} + N_{i-1} (i \geq 2)$$

whereby the partial quotient $Q_i$ obtained at each successive iteration is corrected in partial quotient correction means connected to said multiplier means according the following correction rules:

for $Q_{i-1} + N_{i-1} \geq 0,\ Q_i + N_i \geq 0$
$Q_{i-1}^* = Q_{i-1}$

for $Q_{i-1} + N_{i-1} \geq 0,\ Q_i + N_i < 0$
$Q_{i-1}^* = Q_{i-1} - p^{-(i-1)\alpha}$

for $Q_{i-1} + N_{i-1} < 0,\ Q_i + N_i \geq 0$
$Q_{i-1}^* = Q_{i-1} + p^{-(i-1)\alpha}$

for $Q_{i-1} + N_{i-1} < 0,\ Q_i + N_i < 0$
$Q_{i-1}^* = Q_{i-1}$

where
$Q_i^*$: ith partial quotient after correction
$N_i$: number obtained by subtracting $Q_i$ from the product of i−1 th partial remainder and M
P: base number
$\alpha$: number of digits of a second or following partial quotient $Q_i$.

The above stated objects are further achieved by the present invention by providing a divide method for use in a data processing system which has a table unit for storing a plurality of approximate reciprocal divisors Mo and differences $\Delta$ corresponding to respective ones of said approximate reciprocal divisors between said respective ones and adjacent others of said approximate reciprocal divisors, an interpolation approximation circuit, a multiplier unit comprising the steps of:

addressing said table unit by the high-order bits of said divisor Do in order to access one of said approximate reciprocal divisors Mo and the corresponding difference $\Delta$;

adding said difference $\Delta$ proportionally in accordance with the value of plural bits following said high-order bits of the divisor Do to said one approximate reciprocal divisor Mo in order to obtain an interpolation approximated approximate reciprocal divisor M in said interpolation approximation circuit;

multiplying in said multiplier unit said normalized dividend No by said interpolation approximated approximate reciprocal divisor M in order to obtain a quotient Q,

and whereby the method according to the present invention is characterized by using normalizing means and by using the same iteration and correction rules for deriving a quotient Q as specified above for the divide apparatus according to the present invention.

The present invention will be apparent from the following detailed description taken in conjunction with the accompanying drawings, in which:

Figure 1 is a block diagram showing a table information storage unit and an interpolation approximation circuit;

Figure 2 is a table showing a relation between the input and output of a multiple generator shown in Figure 1;

Figure 3 and Figure 4 are graphs for explaining the accuracy of interpolation approximation according to one embodiment of the present invention;

Figure 5 is a whole block diagram showing the divide apparatus according to one embodiment of the present invention; and

Figure 6 and Figure 7 are schematic diagrams for explaining particular operations according to the present invention.

Prior to giving the description of a particular embodiment according to the present invention, a principle of division applied to the present invention will be described.

The following interpolation approximation is employed in order to improve the accuracy of an approximate reciprocal divisor, and in this case, to obtain an approximate reciprocal divisor the multiplication is performed only once, and in addition only several numbers of bits are sufficient for the multiplier.

For an address n by which a corresponding information is accessed to retrieve it from a look-up table, a variable $x_n$ is expressed as:

$$x_n = 2^{-1} + n \cdot 2^{-a} (n = 0, 1, 2, \ldots, 2^{a-1} - 1)$$

An approximate reciprocal divisor $f(x_n)$ and a difference $\Delta_n$ between the adjacent approximate reciprocal divisors obtained through

$$f(x_n) = \frac{1}{x_n}$$

$$\Delta_n = f(x_{n+1}) - f(x_n)$$

wherein $f(x_{n+1}) = 1$; $n = 2^{a-1}$) are stored as a table information, and an approximate reciprocal divisor associated with $x_n + h$ can be obtained through

$$f(x_n + h) = f(x_n) + h \cdot \Delta_n (0 \leq h < 2^{-a})$$

As to the check and correction of the quotient, these processings can be included within the successive iterations if the following divide method is employed. Therefore, the processings to multiply the divisor by the number obtained by adding 1 to the lowest bit of the quotient calculated through successive iterations as described above can be dispensed with.

Whether a fixed point notation without an exponent term or a floating point notation with an exponent term is used for representing a number, in order to perform a division of a P base number, first the divisor and the dividend are normalized so that they may be represented by the equations (1) and (2), and an intermediary quotient is calculated wherein $D_0$ denotes a divisor after being normalized and $N_0$ denotes a dividend after being normalized.

$$D_0 = \sum_{k=1}^{n} D_{0,k} \times P^{-k} \qquad \begin{bmatrix} D_{0,k} \text{ is an integer} \\ 0 \leq D_{0,k} < P, \\ D_{0,1} \neq 0 \end{bmatrix} \qquad (1)$$

$$N_0 = \sum_{k=1}^{n} N_{0,k} \times P^{-k} \qquad \begin{bmatrix} N_{0,k} \text{ is an integer} \\ 0 \leq N_{0,k} < P, \\ N_{0,1} \neq 0 \end{bmatrix} \qquad (2)$$

The intermediary quotient Q obtained is within a range of the formula (3), that is, either in a normalized form or in a overflowing-by-one-digit form.

4

$$P^{-1} < Q < P \tag{3}$$

$$\therefore \frac{P^{-1}}{\displaystyle\sum_{k=1}^{\infty}(P-1)\times P^{-k}} < Q = \frac{N_0}{D_0} < \frac{\displaystyle\sum_{k=1}^{\infty}(P-1)\times P^{-k}}{P^{-1}}$$

After calculating the intermediary quotient, on the one hand in the case of a fixed point notation, the number of digit shift counts required for normalizing the divisor is subtracted by the number of digit shift counts required for normalizing the dividend, and if the resultant difference is positive (digit shift to the left is assumed positive), the intermediary quotient $Q$ is shifted to the left by the difference number of digit shift counts, while if the difference is negative, then the intermediary quotient $Q$ is shifted to the right by the difference number of digit shift counts, so that a final quotient can be obtained.

On the other hand, in a floating point notation, the addition result of the difference obtained by subtracting the exponent term of the divisor from the exponent term of the dividend, and the difference obtained by subtracting the number of digit shift counts required for normalizing the fixed point term of the divisor from the number of digit shift counts required for normalizing the dividend, is used as an exponent term of the division result, and further if the intermediary quotient is in an overflow form, the exponent term is added by 1 to make the fixed point term normalized, so that a final quotient can be obtained.

Since a sign for the quotient can be algebraically determined by the signs of the divisor and dividend, the intermediary quotient may be calculated by using, if required, the absolute and normalized values of the divisor and dividend, and if the final quotient is negative, then the intermediary quotient is changed to have a desired representation.

With the above assumptions, the divisor and dividend are dealt with in the absolute and normalized form as in the formulas (1) and (2) hereinafter. First, symbols used herein will be described.

$M$: approximate reciprocal divisor of $D_0$

$Q_i$: i th partial quotient

$Q_i^*$: i th partial quotient after correction

$R_i$: i th partial remainder where $R_0 = N_0$

$N_i$: number obtained by subtracting $Q_i$ from the product of $R_{i-1}$ and $M$

$A$: number multiplied and $Q_i$ when $Q_{i+1} + N_{i+1}$, which is M times as large as the j th partial remainder $R_i$, is calculated from $Q_i$, $N_i$

$\alpha$: the number of digits of a second or following partial quotient

$Q$: correct quotient which becomes recurring decimals and has the infinite number of digits if the dividend can not be divided by the divisor without leaving a remainder.

A sufficient condition for obtaining $\alpha$ digits in the second and following partial quotients is determined by so selecting $M$ as to suffice the formula (4).

$$1 \leq D_0 \times M < 1 + P^{-(\alpha+1)} \tag{4}$$

Prior to proceed with successive iterations, the calculations shown by the formulas (5) and (6) are performed.

$$A = 1 - D_0 \times M \tag{5}$$

$$Q_1 + N_1 = N_0 \times M \tag{6}$$

In the successive iterations, the partial quotient is solved and the preceding one is corrected in such a way as shown in the following formulas.

$$Q_i + N_i = A \times Q_{i-1} + N_{i-1} \quad (i \geq 2) \tag{7}$$

correction of partial quotient

for $Q_{i-1} + N_{i-1} \geq 0$, $Q_i + N_i \geq 0$

$$Q_{i-1}^* = Q_{i-1} \tag{8}$$

for $Q_{i-1} + N_{i-1} \geq 0$, $Q_i + N_i < 0$

$$Q_{i-1}^* = Q_{i-1} - P^{-(i-1)\alpha} \tag{9}$$

for $Q_{i-1} + N_{i-1} < 0$, $Q_i + N_i \geq 0$

$$Q_{i-1}^* = Q_{i-1} + P^{-(i-1)\alpha} \tag{10}$$

for $Q_{i-1} + N_{i-1} < 0$, $Q_i + N_i < 0$

$$Q_{i-1}^* = Q_{i-1} \tag{11}$$

In a merge process for a partial quotient along with the process in the formula (9), by adopting as $Q_i$ the position of $P^{-(i-1)a-1} \sim P^{-ia}$, the result is that $Q_i$ is added with $P^{-(i-1)a}$, and the negative quotient following $Q_i$ is converted into the positive one. In the formula (10), the negative quotient following $Q_{i-1}$ is corrected from $(P-1)$'s complement into $P$'s complement.

From the above processings, a quotient can be obtained, which is clarified by proving the following items (A) to (E).

Item (A): A can be used for any desired $i \geq 2$, and the number obtained through the formula (7) is the number obtained by multiplying the $i-1$ th partial remainder $R_{i-1}$ by the approximate reciprocal divisor M.

Item (B): $Q_1$ is positive and has $a \sim (a+2)$ digits, and when compared above the position $P^{-a}$ with the correct quotient, it is either equal to or larger by $P^{-a}$. That is,

$$P^{-1} < Q_1 \leq P \tag{12}$$

$$-D_0 \times P^{-a} < R_1 = \frac{Q_2 + N_2}{M} < D_0 \times P^{-a} \tag{13}$$

Item (C): $Q_i (i \geq 2)$ may be either positive, zero, or negative, and has $a$ digits at thea position of $P^{-(i-1)a-1} \sim P^{-ia}$, and when compared at the position corresponding to $Q_i$ with the correct quotient $Q$, it is either equal to or larger by $P^{-ia}$. That is,

$$-P^{-(i-1)a} < Q_i + N_i < P^{-(i-1)a} \tag{14}$$

$$-D_0 \times P^{-ia} < R_i = \frac{Q_{i+1} + N_{i+1}}{M} < D_0 \times P^{-ia} \tag{15}$$

If Q is negative, in the corrected form of P's complement from $(P-1)$'s complement, it is compared with the correct quotient.

Item (D): the correction of $-P^{-ia}$ for $Q_i$ is not introduced into the $Q_{i-1}$ th and preceding partial quotients.

Item (E): the correction of $+P^{-ia}$ for $Q_i$ is not introduced into the $Q_{i-1}$ th and preceding partial quotients.

Demonstration of Item (A)

For $i=2$

$$\begin{aligned}
Q_2 + N_2 &= R_1 \times M \\
&= (N_0 - D_0 \times Q_1) \times M \\
&= N_0 \times M - D_0 \times Q_1 \times M \\
&= Q_1 + N_1 - D_0 \times M \times Q_1 \\
&= (1 - D_0 \times M) \times Q_1 + N_1 \\
&= A \times Q_1 + N_1
\end{aligned}$$

so the item (A) is proved.

If it is assumed that the item (A) is proved for $i=k$ and that

$$\begin{aligned}
Q_k + N_k &= R_{k-1} \times M \\
&= A \times Q_{k-1} + N_{k-1}
\end{aligned}$$

then

$$\begin{aligned}
Q_{k+1} + N_{k+1} &= R_k \times M \\
&= (R_{k-1} - D_0 \times Q_k) \times M \\
&= (\frac{Q_k + N_k}{M} - S_0 \times Q_k) \times M \\
&= Q_k + N_k - D_0 \times Q_k \times M \\
&= (1 - D_0 \times M) \times Q_k + N_k \\
&= A \times Q_k + N_k
\end{aligned}$$

so that the item (A) for $i=k+1$ is also proved. Since the item (A) for $i=2$ has previously been proved, by introducing a mathematical induction method, the item (A) for any desired $i \geq 2$ is proved.

Demonstration of item (B)

Each term in the formula (4) is multiplied by the correct quotient Q, which yields

$$Q \leq Q_1 + N_1 = N_0 \times M < Q + Q \times P^{-(a+1)} \qquad (16)$$

and from the formula (3) $P^{-1} < Q < P$ and the formula (16),

$$P^{-1} < Q_1 \leq P$$

is established.

$$-P^{-a} < R_1 \times M = Q_2 + N_2 = (1 - D_0 \times M) \times Q_1 + N_1 < P^{-a} \qquad (17)$$

$$(Q_1 \leq P, \ 0 \leq N_1 < P^{-a}$$

from the formula (4)

$$-P^{-(a+1)} < 1 - D_0 \times M \leq 0)$$

Since it can be said from the formula (4) that

$$0 < \frac{1}{M} \leq D_0,$$

and by multiplying the outer term of the inequality (17) by $D_0$ and the inner term by 1/M, then the following formula is obtained.

$$-D_0 \times P^{-a} < R_1 = \frac{Q_2 + N_2}{M} < D_0 \times P^{-a}$$

Demonstration of item (C)

The formula (14) can be established since from the formula (17) the following formula for i=2 is obtained.

$$-P^{-a} < Q_2 + N_2 < P^{-a}$$

If $Q_2 + N_2 \geq 0$, then

$$-P^{-(2a+1)} < -P^{-(a+1)} \times Q_2 + N_2 < R_2 \times M = (1 - D_0 \times M) \times Q_2 + N_2$$
$$R_2 \times M = (1 - D_0 \times M) \times Q_2 + N_2 \leq N_2 < P^{-2a}$$
$$(\because Q_2 < P^{-a}, \ 0 \leq N_2 < P^{-2a},$$

from the formula (4)

$$-P^{-(a+1)} < 1 - D_0 \times M \leq 0)$$

From the above two inequalities, and since $-P^{-2a} < -P^{-(2a+1)}$, then

$$-P^{-2a} < R_2 \times M = Q_3 + N_3 < P^{-2a} \qquad (18)$$

Since it can be said from the formula (4) that

$$0 < \frac{1}{M} \leq D_0,$$

and by multiplying the outer term of the inequality (18) by $D_0$ and the inner term by 1/M,

$$-D_0 \times P^{-2a} < R_2 = \frac{Q_3 + N_3}{M} < D_0 \times P^{-2a}$$

therefore, the formula (15) for i=2 can be established.

If $Q_2 + N_2 < 0$, then

$$-P^{-2a} < N_2 \leq R_2 \times M = (1 - D_0 \times M) \times Q_2 + N_2$$
$$R_2 \times M = (1 - D_0 \times M) \times Q_2 + N_2 \leq (1 - D_0 \times M) \times Q_2 < \{-P^{-(a+1)}\}(-P^{-a})$$

In this case, since

$$\{-P^{-(a+1)}\}(-P^{-a})=P^{-(2a+1)}<P^{-2a},$$

the formula (18) is obtained as similar to the case of $Q_2+N_2\geq0$, and the succeeding demonstration is the same as in the case of $Q_2+N_2\geq0$.

From the above the item (C) for $i=2$ is proved.

For $i=k$

$$-P^{-(k-1)a}<Q_k+N_k<P^{-(k-1)a} \tag{19}$$

$$-D_0\times P^{-ka}<R_k=\frac{Q_{k+1}+Q_{k+1}}{M}<D_0\times P^{-ka} \tag{20}$$

are assumed to be established, then for $Q_k+N_k\geq0$,

$$-P^{-ka}<-P^{-(ka+1)}<-P^{-(a+1)}Q_k+N_k<$$
$$Q_{k+1}+N_{k+1}=(1-D_0\times M)\times Q_k+N_k$$
$$Q_{k+1}+N_{k+1}=(1-D_0\times M)\times Q_k+N_k\leq N_k<P^{-kn}$$
$$(\because Q_k\leq P^{-(k-1)a},\ 0\leq N_k<P^{-ka},$$

from the formula (4)

$$-P^{-(a+1)}<1-D_0\times M\leq0)$$

The above two inequalities are combined to obtain the formula (21).

$$-P^{-ka}<Q_{k+1}+N_{k+1}<P^{-ka} \tag{21}$$

for $Q_k+N_k<0$,

$$-P^{-ka}<N_k\leq Q_{k+1}+N_{k+1}=(1-D_0\times M)\times Q_k+N_k$$
$$Q_{k+1}+N_{k+1}=(1-D_0\times M)\times Q_k+N_k<\{-P^{-(a+1)}\}\{-P^{-(k-1)a}\}$$
$$=P^{-(ka+1)}<P^{-ka}$$

The above two inequalities are combined to obtain the formula (21).

From the above, the formula (14) for $i=k+1$ can be established.

Since the formula (14) has been proved for $i=2$, by introducing a mathematical induction method, the formula (14) can be established for all i's where $i\geq2$.

By substituting in the formula (22) $i=k+2$, then the formula (22) is obtained.

$$-P^{-(k+1)a}<Q_{k+2}+N_{k+2}<P^{-(k+1)a} \tag{22}$$

Since it can be said from the formula (4) that

$$0<\frac{1}{M}\leq D_0,$$

by multiplying the outer term of the formula (22) by $D_0$ and the inner term by $1/M$, the formula (23) can be obtained.

$$-D_0\times P^{-(k+1)a}<R_{k+1}=\frac{Q_{k+2}+N_{k+2}}{M}<D_0\times P^{-(k+1)a} \tag{23}$$

This shows that the formula (15) can be established for $i=k+1$. Since the formula (15) for $i=2$ has previously been proved, by introducing a mathematical induction method, the formula (15) can be established for any desired i where $i\geq2$.

8

Demonstration of the item (D)

The correction of $-P^{-i\alpha}$ is brought about while

$$Q_i+N_i \geqq 0, \quad Q_{i+1}+N_{i+1}<0,$$

however, since $Q_{i+1}+N_{i+1}$ is obtained from

$$Q_{i+1}+N_{i+1}=(1-D_0 \times M) \times Q_i+N_i$$
$$(-P^{-(\alpha+1)}<1-D_0 \times M \leqq 0)$$

it becomes $Q_i \neq 0$. The reason is that $Q_{i+1}+N_{i+1}$ can not be negative at $Q_i=0$. Since $Q_i \neq 0$, the correction of $-P^{-\alpha k}$ is not introduced into the $Q_{i-1}$ and preceding partial quotients.

Demonstration of the item (E)

The correction of $+P^{-i\alpha}$ is brought about while

$$Q_i+N_i<0, \quad Q_{i+1}+N_{i+1} \geqq 0.$$

Since the correction of $+P^{-i\alpha}$ is introduced into from $Q_i$ to $Q_{i-1}$, all of the digits of $Q_i$ have to be $P-1$. At this time, since $Q_i$ is represented as a complement of $P-1$, and in the successive iterations it is converted into a complement representation of $P$, $Q_i$ becomes zero.

$$Q'_{i+1}+N_{i+1}=(1-D_0 \times M) \times Q_i+N_i$$
$$(-P^{-(\alpha+1)}<1-D_0 \times M \leqq 0)$$

Since $Q_{i+1}+N_{i+1}$ is obtained from the above formula, in the case $Q_i$ is zero, $Q_{i+1}+N_{i+1}$ becomes equal to $N_i$ and remains negative. Therefore, since all of the digits of $Q_i$ do not become $P-1$ while $Q_{i+1}+N_{i+1}$ is positive, the correction of $+P^{-i\alpha}$ is not introduced into the $Q_{i-1}$ and preceding partial quotients.

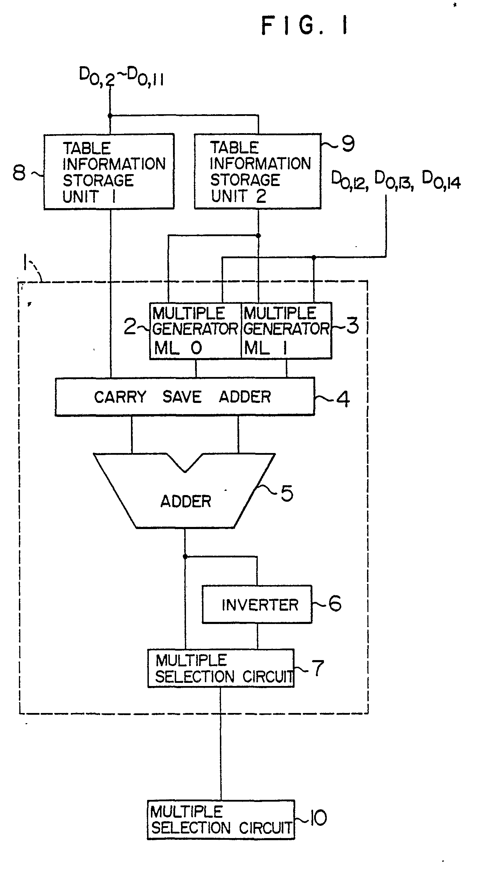

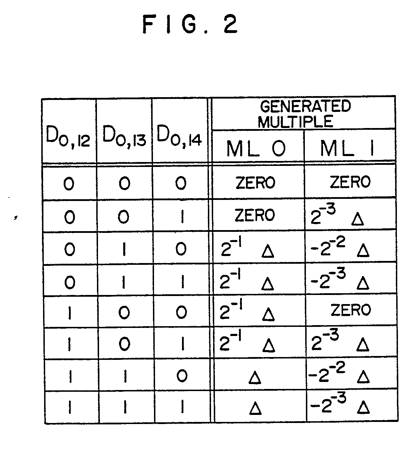

One embodiment of the present invention will now be described in detail with reference to the accompanying drawings. Figure 1 shows a block diagram of an interpolation approximation circuit. In Figure 1, the interpolation approximation circuit 1 comprises multiple generators 2, 3, carry save adder 4, adder 5, inverter 6, and multiple selection circuit 7. The relation between the input and output of the multiple generators 2, 3 is shown in Figure 2. Table information storage units 8, 9 are connected at the input side of the interpolation approximation circuit 1, and a multiple selection circuit 10 is connected to the output side. The table information storage unit 8 stores the approximate reciprocal divisor $M_0$, and the unit 9 stores the difference $\Delta$.

An example of a method for retrieval of stored information in the table information storage units 8 and 9 is as follows.

For the binary divisor represented by the formula (1), by using

$$\frac{1}{2^{-1}+\sum\limits_{k=2}^{11} D_{0,k} \cdot 2^{-k}}=1+\sum\limits_{k=1}^{\infty} M_{0,k} \cdot 2^{-k} \qquad (24)$$

the approximate reciprocal divisor $M_0$ and the difference are obtained as:

$$M_0=1+\sum\limits_{k=1}^{19} M_{0,k} \cdot 2^{-k}+2^{-19} \qquad (25)$$

$$\Delta=\text{(difference between adjacent } M_0\text{'s)} \qquad (26)$$

Since the position $2^0$ of $M_0$ and the positions higher than and including $2^{-8}$ of $\Delta$ indicative of the negative sign are fixed, these are not required to be stored in the table, but these can be added when the table is accessed.

However, $D_0=2^{-1}(D_{0,2}\sim D_{0,11}$ are all "0") is used as an address of the table, particular values for $M_0$ and are output as:

$$M_0=1 . \text{FFFFE (Hexadecimal)} \qquad (27)$$

$$\Delta=\ldots\text{FF.FF822 (Hexadecimal)} \qquad (28)$$

After $M_0$ and $\Delta$ are read out of the table information storage units 8 and 9 by using 10 bits of the

9

normalized divisor from $D_{0,2}$ to $D_{0,11}$ as an address for retrieving the table information, the interpolation approximation is performed by using the bits $D_{0,12}$, $D_{0,13}$, $D_{0,14}$ following the above table address bits for multiplication by the value $\Delta$ by using the multiple generators 2 and 3 shown in Figure 1. $M_0$ from the table information storage unit 8 and two multiples $ML_0$ and $ML_1$ from the multiple generators 2 and 3 are combined in two values by the carry save adder 4, and thereafter are combined into a single value by the adder 5. The addition is performed for the positions higher than $2^{-20}$, and from the interpolation approximation circuit 1, the number obtained by adding $(1-D_{0,15})$ to the positions higher than 2 obtained from the addition result is output as the $2^{-16}$ position. The $2^{-16}$ position is the lowest bit of the multipier bit, and in accordance with the multiple generation theory of the multiplier, the $2^{-16}$ position has an effect of $+2^{-15}$ while the 2 position is 1. Therefore, although the multiplier at $D_0=2^{-1}$ becomes 1.FFFF (hexadecimal), the substantial multiplier becomes 2 because the effect of $+2^{-15}$ in the multiplier device is obtained due to the fact that the $2^{-16}$ position is 1.

The inverter 6 is used in the case that the approximate reciprocal divisor is directly multiplied as a negative number, and the multiple selection circuit 7 in the interpolation circuit 1 is a circuit for selecting either a positive or negative sign for the approximate reciprocal divisor.

By virtue of the above interpolation approximation, the accuracy of the approximate reciprocal divisor suffices the formula (29) and it is improved by three digits in binary notation.

$$1 \leq D_0 \times M < 1.0007\ FF8\ \text{(hexadecimal)} \qquad (29)$$

The value of $D_0 \times M$ has been affirmed with a computer, and the method of affirmation will be summarized as follows.

M is constant within a range

$$\left(2^{-1} + \sum_{k=2}^{15} D_{0,k} \cdot 2^{-k},\ 2^{-1} + \sum_{k=2}^{15} D_{0,k} \cdot 2^{-k} + 2^{-15}\right),$$

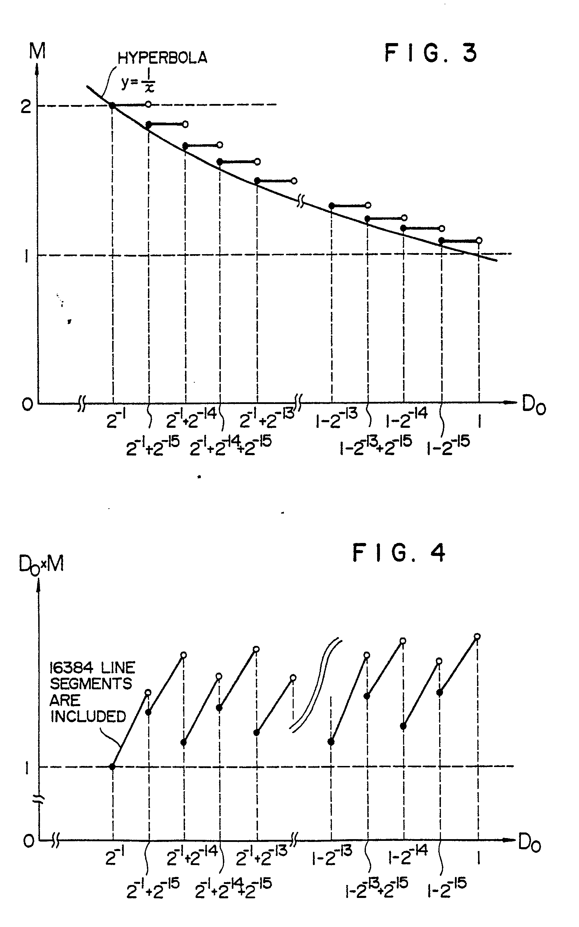

and within $2^{-1} \leq D_0 < 1$, it becomes as shown in Figure 3 a step function with $2^{14}=16384$ line segments of $2^{-15}$ length, while the graph for $D_0 \times M$ as shown in Figure 4 has 16384 line segments in the form of a saw tooth. Therefore,

Lower limit (also the minimum value) of $D_0 \times M$: the minimum value at the left end of 16384 line segments.

Upper limit of $D_0 \times M$: the maximum value of the right end of 16384 line segments.

An embodiment of a divide apparatus according to the present invention is shown as a block diagram of Figure 5. In the figure, the table information storage unit 17 includes both units 8 and 9 shown in Figure 1, and the interpolation approximation circuit 18 is identical with that represented by reference number 1 in Figure 1. The multiplier selection circuit 10 in Figure 1 is represented by reference number 16 in Figure 5. The division is performed in the following sequence, and the control for the whole system is carried out by a control circuit 11.

The divisor set in a divisor register 13 is normalized in a normalizing circuit 14. By using the high order bits of the normalized divisor, the approximate reciprocal divisor and difference are read out from the table information storage unit 17, and the normalized divisor $D_0$ is set in a multiplicand selection circuit and register 15.

After improving the accuracy of the approximate reciprocal divisor by an interpolation approximation circuit 18, first $-M$ is output. $-M$ is selected by a multiplier selection circuit 16 to perform the multiplication of $D_0 \times (-M)$ in the formula (5) by a multiplier 19. In this case, a half carry and half sum are set in respective registers 20 and 21, and thereafter are combined in one by an adder 22, the product being set in a multiplication result register 23.

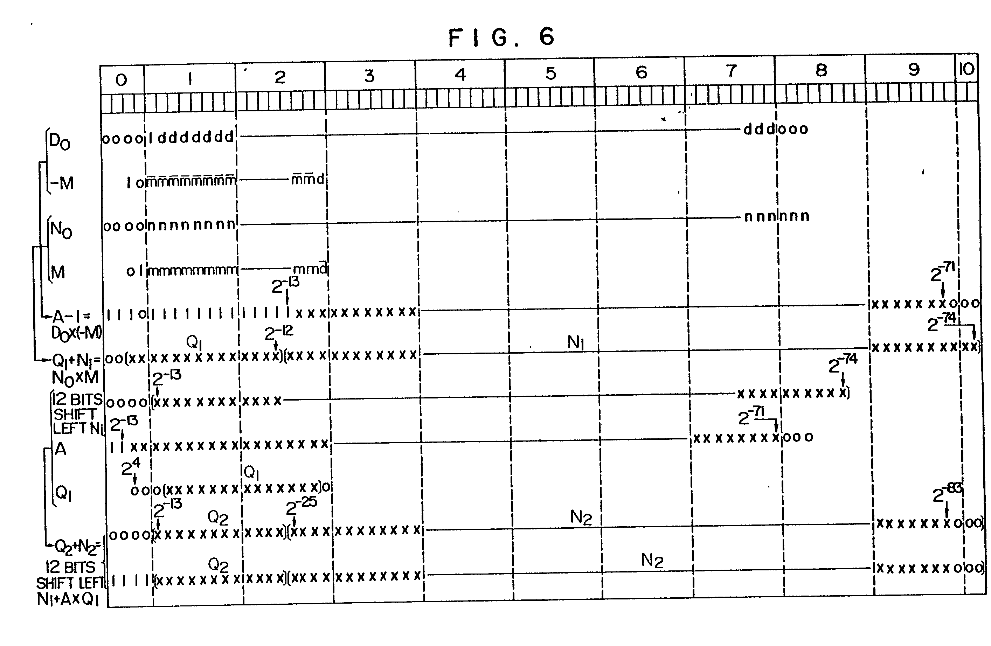

Next, after normalizing the dividend set in a dividend register 12 by the normalization circuit 14, the dividend $N_0$ is set in a multiplicand selection circuit and register 15. The interpolation approximation circuit 18 outputs M which is selected by the multiplier selection circuit to perform the multiplication of $N_0 \times M$ in the formula (6). The product of $N_0 \times M$ is set in the half carry register 20 and the half sum register 21, and concurrently therewith, the product of $D_0 \times (-M)$ in the multiplication result register 23 is set in the multiplicand selection circuit and register 15. In the formula (5), it is shown as adding 1 to $D_0 \times M$ to obtain A, however, since the positions higher than $2^{-13}$ is represented by a negative sign bit after addition of 1, the divide apparatus uses a dividend A which is the bits lower than $2^{-12}$ of $D_0 \times M$. The digit of $2^{-12}$ is used as sign bit, whereby the register 15 is correctly set to zero in the case of $D_0=2^{-1}$ where A becomes zero. Thereafter, the product of $N_0 \times M$ is set in the multiplication result register 23. $N_0 \times M$ is as shown in the formula (6) $Q_1 + N_1$, and as shown in Figure 6, the bits higher than $2^{-12}$ are $Q_1$ while the bits $2^{-13}$ to $2^{-14}$ are $N_1$.

Succeedingly, successive iterations are performed as in the formula (7), and concurrently therewith, the correction of partial quotients as in the formulas (8) to (11) is carried out in a partial quotient correction circuit 24, and the corrected partial quotients are merged in a partial quotient merge circuit 25.

In the successive iterations, the higher order partial quotients $Q_{i-1}$ resulted from the multiplication are selected by the multiplier selection circuit 16, and also the lower order partial quotients $N_{i-1}$ resulted from the multiplication are input as a kind of a multiple into the multiplier 19, thereby adding to $A \times Q_{i-1} \cdot N_{i-1}$ is input after it is shifted 12 bits left. The successive iterations are repeated for the required time, and the final merged quotient is set in a division result register 26.

The number of successive iterations are two in a single precision floating point number with 24 bits at a mantissa, while in a double precision floating point number with 56 bits at a mantissa, the number are five.

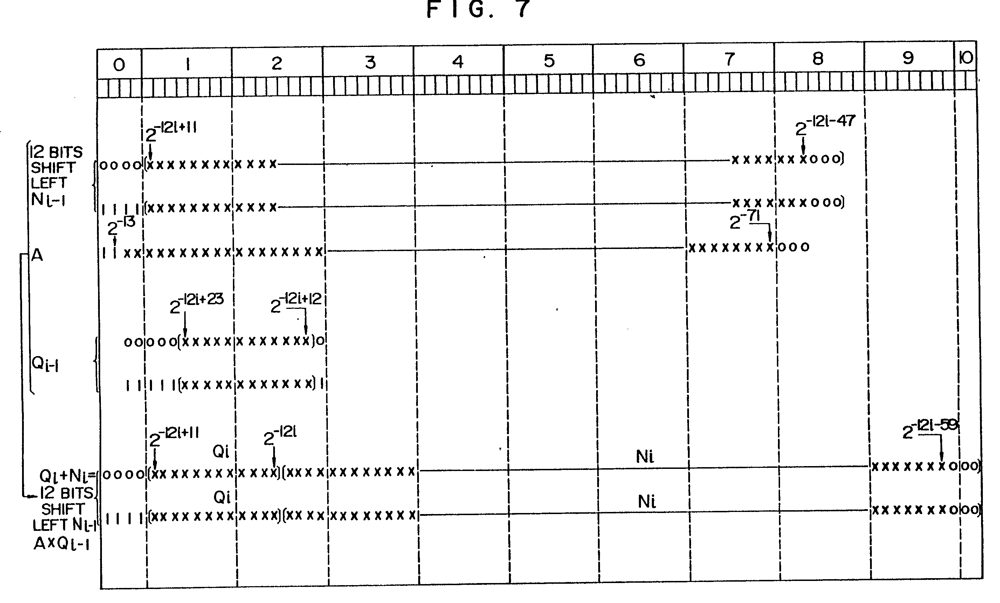

How the above calculation is dealt with in association with an actual number, is shown in Figures 6 and 7. The example shown in Figures 6 and 7 employs a dividend and a divisor of 14 digits in hexadecimal (56) bits). After normalizing in the form of a hexadecimal, the dividend and divisor are shifted left by the number of bits required for normalizing the divisor, and if the dividend overflows left from the position of $2^0$, it is shifted by 4 bits right. As a result, $N_0$ is 59 bits.

As shown in Figures 6 and 7, in the successive iterations, if $Q_{i-1}$ and $N_{i-1}$ are negative, it is required that negative signs are added at the top and that for $Q_{i-1}$, and that for $Q_{i-1}$, 1's complement is corrected into 2's complement by adding 1 to the lowest bit of the multiplier. In Figure 6, with respect to $Q_2+N_2$, the upper one is for a positive or zero case, while the lower one is for a negative case. Similarly, in Figure 7, with respect to $N_{i-1}$, $Q_{i-1}$, and $Q_i+N_i$, the upper one is for a positive or zero case, while the lower one is for a negative case. Further, i is any positive integer sufficing $i \geq 3$.

The partial quotient correction circuit 24 performs a correction shown by the formulas (8) to (11). It is understood in conclusion that the formulas (8) to (11) detect the sign. Therefore, as data to be copied from the multiplication result register 23 to the partial quotient correction circuit 24, only $Q_i$ and a sign will be quite enough. More in particular, in the case of the lower most $Q_2+N_2$ in Figure 6, since the sign can be identified by $2^0$ bit, $2^0$ indicative of the sign and $Q_2$ of 12 bits are used. The partial quotient circuit 25 receives every 12 bit partial quotients from the partial quotient correction circuit 24, and merges so as not to overlap the bits of every 12 bit partial quotients.

An actual example of the division will now be described in the following by illustratively taking a divisor $D_0$ and a dividend $N_0$ as:

$$D_0 = 0.91A2B400 \text{ (hexadecimal)}$$
$$N_0 = 0.48D159E26AF37BC0 \text{ (hexadecimal)}$$

(i) The upper 11 bits of $D_0$ are

$$0.91A \text{ (hexadecimal)} = 0.1001\ 0001\ 101 \text{ (binary)}$$

and

$$\frac{1}{0.1001\ 0001\ 101} = 1.1100\ 0010\ 0000\ 1000\ 010...$$

$$\frac{1}{0.1001\ 0001\ 110} = 1.1100\ 0001\ 1010\ 0101\ 100...$$

so that the following numbers are output as table information.

$$M_0 = 1.1100\ 0010\ 0000\ 1000\ 011 \text{ (binary)}$$
$$= 1.C2086 \text{ (hexadecimal)}$$
$$\Delta = ...\ 1111.1111\ 1111\ 1001\ 1101\ 010 \text{ (binary)}$$
$$= ...\ F.FF9D4 \text{ (hexadecimal)}$$

Since $D_{0,12} = D_{0,13} = D_{0,14} = 0$, $D_{0,15} = 1$, the interpolation approximation becomes all zero, and the value of M used as a final approximate reciprocal divisor is:

$$M = 1.C208$$
$$-M = ...FE.3DF8$$

(hereinafter, hexadecimal notation is used unless otherwise specified)

(ii) $\qquad A = 1 + D_0 \times (-M)$

$$= ...FF.FFFB72826$$

(iii) $\qquad Q_1 + N_1 = N_0 \times M$

$$= 0.8002468ACF1357235E0$$
$$Q_1 = 0.800$$
$$N_1 = 0.0002468ACF1357235E0$$

(iv)   $16^3(Q_2+N_2)=16^3(A\times Q_1+N_1)$

$$=\ldots\text{FF.FFFCBFF1357235E}$$
$$16^3Q_2=\ldots\text{FF.FFF}$$
$$16^3N_2=\ldots\text{FF.FFFCBFF1357235E}$$
$$Q_1{}^*=0.800-0.001$$
$$=0.7\text{FF}$$

(v)   $16^6(Q_3+N_3)=16^6\{A\times(Q_2+16^{-6})+N_2\}$
$$=16^6N_2$$
$$=\ldots\text{FF.CBFF1357235E}$$
$$16^6Q_3=\ldots\text{FF.CBF}$$
$$16^6N_3=\ldots\text{FF.FFFF1357235E}$$
$$16^3Q_2{}^*=0.\text{FFF}$$

(vi)   $16^9(Q_4+N_4)=16^9\{A\times(Q_3+16^{-9})+N_3\}$
$$=0.000\ 14\text{A7DE}$$
$$16^6Q_3{}^*=0.\text{CBF}+0.001$$
$$=0.\text{CC0}$$

From the above, assuming to use 8 digits as a quotient, the results are:

quotient: 0.7FFFFFCC
remainder multiplied by M: 0.00000000000014A7DE

In the above description of the embodiment according to the present invention, the partial quotient and partial remainder have been obtained by repeatedly using the same circuits. However application is also possible to a vector divide apparatus of the type in which circuits for obtaining the same number, as that of required repetitions, of partial quotients and partial remainders are disposed by pipelining, and the quotient between corresponding elements of a vector can be obtained every one clock.

According to the present invention, in order to improve the accuracy of an approximate reciprocal divisor, only one multiplication is required while in the prior art two multiplications have been required. In some cases, it takes nearly the same time as required in one addition. Further, although conventionally the check and correction has been effected at the time when the same length quotient as the final quotient is obtained, the check and correction of the quotient according to the present invention can be introduced into the successive iterations so that the execution time for the division is effectively shortened. More in addition, the correction of a partial quotient is not associated with the higher order partial quotients. Therefore, an earlier decision whether normalization of the division result is required or not can be made at the time when the correction of the first quotient is completed.

## Claims

1. A divide apparatus comprising:

table means (8, 9, 17) for storing a plurality of approximate reciprocal divisors Mo, said table means further storing differences $\Delta$ corresponding to respective ones of said approximate reciprocal divisors between said respective ones and adjacent others of said approximate reciprocal divisors, and outputting one of said approximate reciprocal divisors Mo and the corresponding difference $\Delta$ by using the high-order bits of the divisor Do as an address of said table means (8, 9, 17);

interpolation approximation circuit means (18) for proportionally allotting said difference $\Delta$ in accordance with a plurality of bits following the high-order bits of said divisor Do and for outputting a difference proportionate to the value of said plurality of bits and adding said proportional difference to said approximate reciprocal divisor Mo for outputting an interpolation approximated approximate reciprocal divisor M;

multiplier means (19—22) for multiplying said dividend No by said interpolation approximated approximate reciprocal divisor M in order to obtain a quotient Q, characterized in that said divisor and said dividend are obtained by normalizing in normalizing means (14) and in that said quotient Q is derived according to the following iteration rules

$$A=1-Do\times M;$$
$$Q_1+N_1=N_0\times M \text{ and}$$
$$Q_i+N_i=A\times Q_{i-1}+N_{i-1}(i\geq 2)$$

whereby the partial quotient $Q_i$ obtained at each successive iteration is corrected in partial quotient correction means (24), connected to said multiplier means (19—22) according the following correction rules:

for $Q_{i-1}+N_{i-1}\geq 0,\ Q_i+N_i\geq 0$
$$Q_{i-1}^{*}=Q_{i-1}$$

for $Q_{i-1}+N_{i-1}\geq 0,\ Q_i+N_i<0$
$$Q_{i-1}^{*}=Q_{i-1}-P^{-(i-1)a}$$

for $Q_{i-1}+N_{i-1}<0,\ Q_i+N_i\geq 0$
$$Q_{i-1}^{*}=Q_{i-1}+P^{-(i-1)a}$$

for $Q_{i-1}+N_{i-1}<0,\ Q_i+N_i<0$
$$Q_{i-1}^{*}=Q_{i-1}$$

where

$Q_i^{*}$: i th partial quotient after correction

$N_i$: number obtained by subtracting $Q_i$ from the product of i−1 th partial remainder and M

P: base number

a: number of digits of a second or following partial quotient $Q_i$.

2. A divide method for use in a data processing system which has a table unit (8, 9, 17) for storing a plurality of approximate reciprocal divisors Mo and differences Δ corresponding to respective ones of said approximate reciprocal divisors between said respective ones and adjacent others of said approximate reciprocal divisors, an interpolation approximation circuit (18), a multiplier unit (19—22), comprising the steps of:

addressing said table unit (8, 9, 17) by the high-order bits of said divisor Do in order to access one of said approximate reciprocal divisors Mo and the corresponding difference Δ;

adding said difference Δ proportionally in accordance with the value of plural bits following said, high-order bits of the divisor Do to said one approximate reciprocal divisor Mo in order to obtain an interpolation approximated approximate reciprocal divisor M in said interpolation approximation circuit (18);

multiplying in said multiplier unit (19—22) said dividend No by said interpolation approximated approximate reciprocal divisor M in order to obtain a quotient Q, characterized in that said divisor and said dividend are obtained by a normalizing step in a normalization circuit (14) and that said quotient Q is derived according to the following iteration rules

$$A=1-Do\times M;$$
$$Q_1+N_1=N_0\times M \text{ and}$$
$$Q_i+N_i=A\times Q_{i-1}+N_{i-1}\ (i\geq 2)$$

whereby the partial quotient $Q_i$ obtained at each successive iteration is corrected in said partial quotient correction means (24), connected to said multiplier means (19—22) according the following correction rules:

for $Q_{i-1}+N_{i-1}\geq 0,\ Q_i+N_i\geq 0$
$$Q_{i-1}^{*}=Q_{i-1}$$

for $Q_{i-1}+N_{i-1}\geq 0,\ Q_i+N_i<0$
$$Q_{i-1}^{*}=Q_{i-1}-P^{-(i-1)a}$$

for $Q_{i-1}+N_{i-1}<0,\ Q_i+N_i\geq 0$
$$Q_{i-1}^{*}=Q_{i-1}+P^{-(i-1)a}$$

for $Q_{i-1}+N_{i-1}<0,\ Q_i+N_i<0$
$$Q_{i-1}^{*}=Q_{i-1}$$

where

$Q_i^{*}$: i th partial quotient after correction

$N_i$: number obtained by subtracting $Q_i$ from the product of i−1 th partial remainder and M

P: base number

a: number of digits of a second or following partial quotient $Q_i$.

## Patentansprüche

1. Divisionsgerät, umfassend:

Tabellen (8, 9, 17) zur Speicherung einer Mehrzahl von approximativen reziproken Divisoren Mo, wobei die Tabellen ferner Differenzen Δ entsprechend jeweiligen der approximativen reziproken Divisoren zwischen den jeweiligen und benachbarten weiteren der approximativen reziproken Divisoren speichern und einen der approximativen reziproken Divisoren Mo und die entsprechende Differenz Δ ausgeben unter Nutzung der Bits höherer Ordnung des Divisors Do als eine Adresse der Tabellen (8, 9, 17);

eine Interpolationsnäherungsschaltung (18) zur proportionalen Zuordnung der Differenz Δ nach Maßgabe einer Mehrzahl Bits, die auf die Bits höherer Ordnung des Divisors Do folgen, und zur Ausgabe einer Differenz, die dem Wert der Mehrzahl Bits proportional ist, und zur Addition der proportionalen Differenz zu dem approximativen reziproken Divisor Mo zur Ausgabe eines interpolationsgenäherten approximativen reziproken Divisors M;

Multiplikationsmittel (19—22) zur Multiplikation des Dividenden No mit dem interpolationsgenäherten approximativen reziproken Divisor M unter Bildung eines Quotienten Q, dadurch gekennzeichnet, daß der Divisor und der Dividend durch Normierung in einer Normierungsschaltung (14) gebildet werden und daß der Quotient Q gemäß den folgenden Iterationsregeln abgeleitet wird:

$$A = 1 - Do \times M;$$
$$Q_1 + N_1 = N_0 \times M \text{ und}$$
$$Q_i + N_i = A \times Q_{i-1} + N_{i-1} (i \geq 2)$$

so daß der in jeder aufeinanderfolgenden Iteration gewonnene Teilquotient $Q_i$ in einer mit den Multiplikationsmitteln (19—22) verbundenen Teilquotient - Korrektureinheit (24) entsprechend den folgenden Korrekturregeln korrigiert wird:

für $Q_{i-1} + N_{i-1} \geq 0$, $Q_i + N_i \geq 0$
$$Q_{i-1}^* = Q_{i-1},$$

für $Q_{i-1} + N_{i-1} \geq 0$, $Q_i + N_i < 0$
$$Q_{i-1}^* = Q_{i-1} - P^{-(i-1)a}$$

für $Q_{i-1} + N_{i-1} < 0$, $Q_i + N_i \geq 0$
$$Q_{i-1}^* = Q_{i-1} + P^{-(i-1)a}$$

für $Q_{i-1} + N_{i-1} < 0$, $Q_i + N_i < 0$
$$Q_{i-1}^* = Q_{i-1}$$

wobei

$Q_i^*$: i-ter Teilquotient nach der Korrektur

$N_i$: durch Subtraktion von $Q_i$ vom Produkt aus i−1-tem Teilrest und M erhaltene Zahl

P: Basiszahl

α: Stellenzahl eines zweite oder folgenden Teilquotienten $Q_i$.

2. Divisionsverfahren zur Anwendung in einem Datenverarbeitungssystem, das aufweist eine Tabelleneinheit (8, 9, 17) zur Speicherung einer Mehrzahl von approximativen reziproken Divisoren Mo und von Differenzen Δ entsprechend jeweiligen der approximativen reziproken Divisoren zwischen den jeweiligen und benachbarten weiteren der approximativen reziproken Divisoren, eine Interpolationsnäherungsschaltung (18), eine Multiplikationseinheit (19—22), umfassend die Schritte:

Adressieren der Tabelleneinheit (8, 9, 17) durch die Bits höherer Ordnung des Divisors Do zwecks Zugriff auf einen der approximativen reziproken Divisoren Mo und der entsprechenden Differenz Δ;

proportionales Addieren der Differenz Δ nach Maßgabe des Werts von mehreren Bits, die auf die Bits höherer Ordnung des Divisors Do folgen, zu dem einen approximativen reziproken Divisor Mo, um einen interpolationsgenäherten approximativen reziproken Divisor M in der Interpolationsnäherungsschaltung (18) zu erhalten;

Multiplizieren in der Multiplikationseinheit (19—22) des Dividenden No mit dem interpolationsgenäherten approximativen reziproken Divisor M zur Bildung eines Quotienten Q, dadurch gekennzeichnet, daß der Divisor und der Dividend durch einen Normierungsschritt in einer Normierungschaltung (14) gewonnen werden und daß der Quotient Q gemäß den folgenden Iterationsregeln abgeleitet wird:

$$A = 1 - Do \times M;$$
$$Q_1 + N_1 = N_0 \times M \text{ und}$$
$$Q_i + N_i = A \times Q_{i-1} + N_{i-1} (i \geq 2)$$

so daß der in jeder aufeinanderfolgenden Iteration gewonnene Teilquotient $Q_i$ in einer mit den Multiplikationsmitteln (19—22) verbundenen Teilquotient-Korrektureinheit (24) entsprechend den folgenden Korrekturregeln korrigiert wird:

für $Q_{i-1} + N_{i-1} \geq 0$, $Q_i + N_i \geq 0$
$$Q_{i-1}^* = Q_{i-1}$$

für $Q_{i-1} + N_{i-1} \geq 0$, $Q_i + N_i < 0$
$$Q_{i-1}^* = Q_{i-1} - P^{-(i-1)a}$$

für $Q_{i-1}+N_{i-1}<0$, $Q_i+N_i\geq0$
$$Q_{i-1}^*=Q_{i-1}+P^{-(i-1)a}$$

für $Q_{i-1}+N_{i-1}<0$, $Q_i+N_i<0$
$$Q_{i-1}^*=Q_{i-1}$$

wobei

$Q_i^*$: i-ter Teilquotient nach der Korrektur
$N_i$: durch Subtraktion von $Q_i$ vom Produkt aus i—1-tem Teilrest und M erhaltene Zahl
P: Basiszahl
$a$: Stellenzahl eines zweiten oder folgenden Teilquotienten $Q_i$.

**Revendications**

1. Dispositif de division comprenant:

des moyens formant tables (8, 9, 17) servant à mémoriser une pluralité de diviseurs réciproques approchés Mo, lesdits moyens formant tables mémorisant en outre des différences $\Delta$, qui correspondent à des diviseurs respectifs faisant partie desdits diviseurs réciproques approchés, entre lesdits diviseurs respectifs et d'autres diviseurs voisins faisant partie desdits diviseurs réciproques approchés, et délivrer l'un desdits diviseurs réciproques approchés Mo et la différence correspondante $\Delta$, moyennant l'utilisation des bits de rang élevé du diviseur Do, en tant qu'adresse desdits moyens formant tables (8, 9, 17);

des moyens (18) formant circuit d'approximation d'interpolation, servant à affecter de façon proportionnelle ladite différence $\Delta$ conformément à une pluralité de bits succédant aux bits de rang élevé dudit diviseur Do et à délivrer une différence proportionnelle à la valeur de ladite pluralité de bits et ajouter ladite différence proportionnelle audit diviseur réciproque approché Mo, et à délivrer un diviseur réciproque approché M obtenu par approximation par interpolation;

des moyens multiplicateurs (19—22) servant à multiplier ledit dividende No par ledit diviseur réciproque approché M obtenu par approximation par interpolation, afin d'obtenir un quotient Q, caractérisé en ce que ledit diviseur et ledit dividende sont obtenus au moyen d'une normalisation exécutée dans des moyens de normalisation (14), et en ce que ledit quotient (Q) est obtenu conformément aux règles d'itération suivantes

$$A=1-Do\times M;$$
$$Q_1+N_1=N_0\times M \text{ et}$$
$$Q_i+N_i=A\times Q_{i-1}+N_{i-1}(i\geq2)$$

le quotient partiel $Q_i$ obtenu lors de chaque itération successive étant corrigé dans des moyens (24) de correction du quotient partiel, raccordés auxdits moyens multiplicateurs (19—22), conformément aux règles suivantes de correction:

pour $Q_{i-1}+N_{i-1}\geq0$, $Q_i+N_i\geq0$
$$Q_{i-1}^*=Q_{i-1}$$

pour $Q_{i-1}+N_{i-1}\geq0$, $Q_i+N_i<0$
$$Q_{i-1}^*=Q_{i-1}-P^{-(i-1)a}$$

pour $Q_{i-1}+N_{i-1}<0$, $Q_i+N_i\geq0$
$$Q_{i-1}^*=Q_{i-1}+P^{-(i-1)a}$$

pour $Q_{i-1}+N_{i-1}<0$, $Q_i+N_i<0$
$$Q_{i-1}^*=Q_{i-1}$$

avec

$Q_i^*$: i-ème quotient partiel après correction,
$N_i$: nombre obtenu en soustrayant $Q_i$ du produit du i-ième reste partiel par M,
P: Nombre de base
$a$: Nombre de chiffres d'un second quotient partiel ou quotient partiel suivant $Q_i$.

2. Procédé de division destiné à être utilisé dans un système de traitement de données, qui possède une unité en forme de table (8, 9, 17) servant à mémoriser une pluralité de diviseurs réciproques approchés Mo et des différences $\Delta$, qui correspondent à des diviseurs respectifs faisant partie desdits diviseurs réciproques approchés, entre lesdits diviseurs respectifs et d'autres diviseurs voisins faisant partie desdits diviseurs réciproques approchés, et un circuit d'approximation par interpolation (18), une unité formant multiplicateur (19—22), incluant les étapes consistant à:

adresser ladite unité formant table (8, 9, 10) par les bits de rang élevé dudit diviseur Do de manière à avoir accès à l'un desdits diviseurs réciproques approchés Mo et à la différence correspondante $\Delta$;

ajouter, de façon proportionnelle et conformément à la valeur de plusieurs bits succédant auxdits bits de rang élevée du diviseur Do, ladite différence $\Delta$ auxdits diviseurs réciproques approchés Mo afin d'obtenir un diviseur réciproque approché M obtenu par approximation par interpolation, dans ledit circuit d'approximation par interpolation (18);

multiplier, dans ladite unité formant multiplicateur (19—22), ledit dividende No par ledit diviseur réciproque approché M, obtenu par approximation par interpolation, de manière à obtenir un quotient Q, caractérisé en ce que ledit diviseur et ledit dividende sont obtenus au moyen d'une étape de normalisation exécutée dans un circuit de normalisation (14), et que ledit quotient Q est obtenu conformément aux règles d'itération suivantes:

$$A = 1 - Do \times M;$$
$$Q_1 + N_1 = N_0 \times M \text{ et}$$
$$Q_i + N_i = A \times Q_{i-1} + N_{i-1} (i \geqslant 2)$$

le quotient partiel $Q_i$ obtenu lors de chaque itération successive étant corrigé dans lesdits moyens (24) de correction du quotient partiel, raccordés auxdits moyens multiplicateurs (19—22) conformément aux règles suivantes de correction:

$$\text{pour} \quad Q_{i-1} + N_{i-1} \geqslant 0, \ Q_i + N_i \geqslant 0$$
$$Q_{i-1}^{*} = Q_{i-1}$$

$$\text{pour} \quad Q_{i-1} + N_{i-1} \geqslant 0, \ Q_i + N_i < 0$$
$$Q_{i-1}^{*} = Q_{i-1} - P^{-(i-1)a}$$

$$\text{pour} \quad Q_{i-1} + N_{i-1} < 0, \ Q_i + N_i \geqslant 0$$
$$Q_{i-1}^{*} = Q_{i-1} + P^{-(i-1)a}$$

$$\text{pour} \quad Q_{i-1}^{*} + N_{i-1} < 0, \ Q_i + N_i < 0$$
$$Q_{i-1}^{*} = Q_{i-1}$$

avec

$Q_i^{*}$: i-ème quotient partiel avec correction,

$N_i$: Nombre obtenu en soustrayant $Q_i$ du produit du i-lème reste partiel par M,

P: Nombre de base

$a$: Nombre de chiffres d'un second quotient partiel ou quotient partiel suivant $Q_1$.

F I G. I

# F I G . 2

| $D_{0,12}$ | $D_{0,13}$ | $D_{0,14}$ | GENERATED MULTIPLE | |
|:---:|:---:|:---:|:---:|:---:|
| | | | ML 0 | ML 1 |
| 0 | 0 | 0 | ZERO | ZERO |
| 0 | 0 | 1 | ZERO | $2^{-3} \Delta$ |
| 0 | 1 | 0 | $2^{-1} \Delta$ | $-2^{-2} \Delta$ |
| 0 | 1 | 1 | $2^{-1} \Delta$ | $-2^{-3} \Delta$ |
| 1 | 0 | 0 | $2^{-1} \Delta$ | ZERO |
| 1 | 0 | 1 | $2^{-1} \Delta$ | $2^{-3} \Delta$ |
| 1 | 1 | 0 | $\Delta$ | $-2^{-2} \Delta$ |
| 1 | 1 | 1 | $\Delta$ | $-2^{-3} \Delta$ |

**EP 0 149 248 B1**

F I G. 3

F I G. 4

FIG. 5

# FIG. 6

EP 0 149 248 B1

| 0 | 1 | 2 | 3 | 4 | 5 | 6 | 7 | 8 | 9 | 10 |
|---|---|---|---|---|---|---|---|---|---|---|

$D_0$  oooo|ddddddd ———————————————————— ddd|ooo

$-M$  |o$\overline{mmmmmmmmm}$ ——— $\overline{mm}$d

$N_0$  oooo|nnnnnnnn ———————————— nnn|nnn

$M$  o|mmmmmmmmm ——— mmd

$2^{-13}$

$A-1 = D_0 \times (-M)$  |||o||||||||||||||xxxxxxxxxx ———————————— xxxxxxxo|oo $\quad 2^{-71}$

$2^{-12}$ $\qquad 2^{-74}$

$Q_1 + N_1 = N_0 \times M$  oo(xxxxxxxxxxxxxx)(xxxx|xxxxxxxxxx —————— $N_1$ ———— xxxxxxxxx|xx) $\quad 2^{-74}$

$2^{-13}$

12 BITS SHIFT LEFT $N_1$  oooo|(xxxxxxxxxxxxx ———————————— xxxx|xxxxxx) $\quad 2^{-74}$

$2^{-13}$ $\qquad 2^{-71}$

$A$  ||xx|xxxxxxxxx|xxxxxxxx ———————— xxxxxxxx|ooo

$2^4$ $\qquad Q_1$

$Q_1$  ooo(xxxxxxx|xxxxxxx)o $\quad 2^{-83}$

$2^{-13}$ $\quad Q_2 \qquad 2^{-25}$

$Q_2 + N_2 =$  oooo|xxxxxxxx|xxxx)(xxxx|xxxxxxxxx| ———— $N_2$ ———— xxxxxxxo|oo)

12 BITS SHIFT LEFT $N_1 + A \times Q_1$  ||||(xxxxxxxx|xxxx)(xxxx|xxxxxxxxx| ———— $N_2$ ———— xxxxxxxo|oo)

EP 0 149 248 B1

# F I G. 7

| 0 | 1 | 2 | 3 | 4 | 5 | 6 | 7 | 8 | 9 | 10 |
|---|---|---|---|---|---|---|---|---|---|----|

12 BITS SHIFT LEFT $N_{L-1}$

$2^{-12L+11}$
oooo(xxxxxxxxxxxx —————————— xxxx xx xooo)

iiii(xxxxxxxxxxxx —————————— xxxx xxxooo)

$2^{-12L-47}$

$2^{-13}$

A  ii xx xxxxxxxxxxxxxxxx ————————— xxxxxxxxooo

$2^{-7L}$

$2^{-12i+23}$   $2^{-12i+12}$

$Q_{i-1}$  oooooo(xxxxxxxxxxxxx)o

iiiiii(xxxxxxxxxxxx)i

$2^{-12L+11}$   $Q_i$   $2^{-12L}$   $N_i$

$Q_L+N_L=$ oooo(xxxxxxxxxxx)(xxxxxxxxxxxxxx ——————— xxxxxxxooo)

$2^{-12L-59}$

12 BITS SHIFT LEFT $N_{L-1}$   $Q_i$   $N_i$

$A \times Q_{L-1}$  iiii(xxxxxxxxxxx)(xxxxxxxxxxxxxx ——————— xxxxxxxooo)